# EUROPÄISCHE PATENTANMELDUNG

(11) **EP 2 853 509 A1**
(43) Veröffentlichungstag der Anmeldung: **01.04.2015**
(21) Anmeldenummer: 14003275.6
(22) Anmeldetag: 22.09.2014
(51) Int. Cl.: B65G 17/08

(54) **Multiflexkette**

(30) Priorität: 25.09.2013 DE 102013015935
(71) Anmelder: iwis antriebssysteme GmbH & Co. KG, 81369 München (DE)
(72) Erfinder: Rasch, Frank, 57234 Wilnsdorf (DE); Thunecke, Bernd, 35708 Haiger (DE)
(74) Vertreter: Grünecker, Kinkeldey, Stockmair & Schwanhäusser

(57) **Zusammenfassung**

Die vorliegende Erfindung betrifft eine Multiflexkette (1) zum Fördern von Produkten mit einem im Wesentlichen durchgehenden Plattenband (2) und einer Vielzahl von Kettengliedern (3), die jeweils einen Teil des Plattenbands ausbilden, wobei die Kettenglieder mittels eines Horizontalgelenks (4) mit Horizontalbolzen (8) und horizontaler Gelenkachse (10) neigbar miteinander verbunden sind. Die Kettenglieder (2) bestehen jeweils aus einem Vorderteil (6) und einem Hinterteil (7) die mittels eines Vertikalgelenks (5) mit Vertikalbolzen (11) und vertikaler Gelenkachse (13) schwenkbar miteinander verbunden sind. Das Vorderteil (6) und das Hinterteil (7) jedes Kettenglieds (2) sind als Gabelkopfelemente ausgebildet. Die Vertikalbolzen (11) und Horizontalbolzen (8) sind in einem Abstand zueinander angeordnet, wodurch das Vertikalgelenk (5) und das Horizontalgelenk (4) jedes Kettenglieds als getrennt voneinander angeordnete Bolzengelenke ausgebildet sind.

## Beschreibung

Die vorliegende Erfindung betrifft eine Multiflexkette, insbesondere eine Seitenbogen-Multiflexkette, mit einem im Wesentlichen durchgehenden Plattenband zum Fördern von Produkten, mit einer Vielzahl von Kettengliedern, die jeweils einen Teil des Kettenbands ausbilden, wobei die Kettenglieder mittels eines Horizontalgelenks mit horizontaler Gelenkachse neigbar miteinander verbunden sind, wobei die Kettenglieder jeweils aus einem Vorderteil und einem Hinterteil bestehen, wobei das Vorderteil und das Hinterteil jedes Kettenglieds mittels eines Vertikalgelenks mit Vertikalbolzen und vertikaler Gelenkachse schwenkbar miteinander verbunden sind, und wobei das Vorderteil des Kettenglieds als Gabelkopfelement ausgebildet ist.

Multiflexketten zum Transport von Produkten sind im Stand der Technik gut bekannt und werden in unterschiedlichen Gebieten der Förderung und Weiterverarbeitung von Produkten eingesetzt. Eine solche Kette ist z.B. in der DE 69822301T2 beschrieben. Bei dieser werden ausschließlich Kreuzgelenke eingesetzt, wodurch die Kette unruhig läuft. Dies beruht hauptsächlich auf der Tatsache, dass der Horizontalbolzen zumindest bereichsweise einen einseitig vorstehenden Vertikalbolzen durchdringt und das Vertikalgelenk schwächt. Aus der DE 32 35 224 A1 ist eine Transportkette bekannt, bei der eine Vielzahl von gabelförmig ausgebildeten Kettengliedern jeweils mittels eines Kardangelenks miteinander verbunden und mit einer Platte zur Ausbildung des Plattenbands versehen sind. Um mit dieser Transportkette trotz der auf dem Kettenglied befestigten Platten eine seitliche Biegung um das Kardangelenk zu ermöglichen, sind die Platten mit einer Reihe von Zähnen versehen, die zwischen die entsprechenden Zähne einer benachbarten Platte eingreifen, um so trotz der Spalten zwischen den Platten benachbarter Kettenglieder ein im Wesentlichen durchgängiges Plattenband auszubilden.

Die ineinander greifenden Zähne benachbarter Platten eines Plattenbandes reduzieren zwar die Spalte zwischen diesen Platten beim seitlichen Verschwenken der Multiflexkette, jedoch entstehen durch die kämmenden Zähne statt eines großen Spalts mehrere versetzt zueinander angeordnete Spalte, die sich abwechselnd öffnen und schließen. Darüber hinaus begrenzt der Abstand der Zähne in den Lücken den Seitenradius der Multiflexkette. Beim Öffnen und Schließen der Spalte können auf dem Plattenband geförderte Kleinteile oder Produktteile in einen Spalt gelangen und so zu einer Beschädigung des Produkts selbst oder gar zu einem Ausfall des Plattenband-Förderers führen. Darüber hinaus stellen die sich öffnenden und schließenden Spalte ein Gefährdungspotenzial für die an der Multiflexkette arbeitenden Personen dar.

Zur Lösung dieser verschiedenen Probleme wurden im Stand der Technik bereits verschiedene verbesserte Multiflexketten vorgeschlagen. Die Druckschrift DE 102 27 323 A1 beschreibt hierzu eine Transportkette mit einer Vielzahl von einzelnen Tragplatten, die fest auf den Kettengliedern einer Rundkette befestigt sind und deren Vorderkante und Hinterkante abgeschrägt ausgebildet sind, so dass sich die Transportplatten im Kurvenverlauf auf der Innenseite überdecken. Dem gegenüber wird in der EP 926 082 A1 eine Multiflexkette gezeigt, bei der eine mit dem Vertikalgelenk verbundene Abdeckplatte als Teil des Plattenbands in einer bogenförmigen Vertiefung im Körper des folgenden Kettenglieds aufgenommen ist und sich mit dem benachbarten Kettenglied in der Vertiefung relativ zum ersten Kettenglied dreht.

Eine weitere Multiflexkette mit einem Kardangelenk ist aus der EP 910 540 B1 bekannt. Dabei ist auf dem zylindrischen Bolzen des Kardangelenks eine Platte vorgesehen, die einen Teil der Transportoberfläche ausbildet. Diese Platte auf dem Bolzen des Kardangelenks bildet zusammen mit einer Platte auf dem gabelförmig ausgebildeten Kettenglied die Transportoberfläche aus und ist im Wesentlichen spaltfrei gegenüber dem Plattenteil auf dem Gabelabschnitt verschwenkbar. Beim Neigen der Kette um das Horizontalgelenk entsteht zwischen den Platten der angrenzenden Kettenglieder eine Stufe mit Spalt zwischen der Platte auf dem Bolzen des Kardangelenks und der Platte auf dem gabelförmigen Abschnitt des Kettenglieds.

Eine spezielle Seitenbogen-Gelenkkette in der DE 10 2011 117693 A1 offenbart neben eines Bolzengelenks mit horizontaler Gelenkachse ein Kulissengelenk mit einer vertikalen Gelenkachse. Wegen der komplexen Gelenkform und um ein Verschwenken der Kettenglieder um die vertikale Gelenkachse zu ermöglichen, ist das Kulissengelenk getrennt von dem horizontalen Bolzengelenk ausgebildet. Diese Seitenbogen-Gelenkkette ermöglicht neben einem im Wesentlichen spaltfreien Verschwenken der Multiflexkette um das vertikale Kulissengelenk auch eine Neigung der Kette durch das zwischen Vorderteil und Hinterteil der Kettenglieder positionierte horizontale Bolzengelenk. Das Kulissengelenk erfordert bei der Herstellung und Montage eine relativ große Anzahl von Bauteilen sowie einen relativ hohen Montageaufwand.

Eine weitere Transportkette ist aus der DE 69302961 T2 bekannt.

Zwar können die im Stand der Technik bekannten Multiflexketten Spaltprobleme zwischen den einzelnen Tragplatten beim seitlichen Verschwenken der Multiflexkette zumindest zum

Teil lösen und so den Schutz gegen ein Verlieren oder Verklemmen von Produkten verbessern sowie die Sicherheit des Bedienpersonals erhöhen, jedoch treten auch bei diesen neuen Multiflexketten weiterhin Spalte und Absätze zwischen den einzelnen Platten des Plattenbandes auf. Insbesondere bei einer gleichzeitigen Umlenkung um die vertikale und horizontale Gelenkachse, wie es beim Beginn und am Ende von Wendeltürmen benötigt wird, treten Spalte und Stufen sowie ruckartige Bewegungen zwischen den einzelnen Platten auf.

Der Erfindung liegt daher die Aufgabe zugrunde, eine Multiflexkette bereitzustellen, die, insbesondere bei einer gleichzeitigen Bewegung um die vertikale und horizontale Gelenkachse, weiterhin die Spalte zwischen den einzelnen Platten des Plattenbandes reduziert und ein Überstand der Platten des Plattenbandes gegenüber der Transportoberfläche des Plattenbandes verhindert, und die einen gleichmäßigen Lauf aufweist.

Diese Aufgabe wird bei einer gattungsgemäßen Multiflexkette dadurch gelöst, dass das Hinterteil jedes Kettenglieds ebenfalls als Gabelkopfelement ausgebildet ist und dass der Vertikalbolzen und Horizontalbolzen in einem horizontalen Abstand zueinander angeordnet sind, wodurch das Vertikalgelenk und das Horizontalgelenk jedes Kettenglieds als getrennt voneinander angeordnete Bolzengelenke ausgebildet sind.

Die Ausbildung des Vorderteils und Hinterteils der Kettenglieder einer Multiflexkette als einzelne Gabelkopfelemente, ermöglicht trotz der Bolzengelenk-Ausführung der sich abwechselnden Vertikalgelenke und Horizontalgelenke in der Multiflexkette eine nahezu spaltfreie Oberfläche des Plattenbandes, obwohl Vorderteil und Hinterteil jedes Kettenglieds einzelne Teile des Plattenbands ausbilden. Dabei ermöglicht die Ausgestaltung des Vertikalgelenks und des Horizontalgelenks jedes Kettenglieds als Bolzengelenk eine gleichmäßige und reibungsarme Bewegung der Kettenglieder um die vertikale und horizontale Gelenkachse. Diese kardangelenkfreie Konstruktion ermöglicht durch den Abstand der als Bolzengelenke ausgeführten Vertikalgelenke und Horizontalgelenke eine gezielt zugeordnete Bewegung der Teile der Kettenglieder um die jeweiligen Gelenkachsen, so dass die jeweils zugeordneten Toleranzen auch nur in den entsprechenden Spalten zwischen Vorderteil und Hinterteil der Kettenglieder wirksam werden. Dabei ermöglicht das zwischen dem Vorderteil eines Kettenglieds und dem Hinterteil des angrenzenden Kettenglieds angeordnete Horizontalgelenk jenseits der Neigungsbewegung des Horizontalgelenks, das notwendigerweise ein Eindrehen bzw. Ausdrehen der Komponenten des Horizontalgelenks zueinander erfordert, eine veränderungsfreie Spaltensituation auf der Plattenbandoberseite und entsprechend einen sicheren Transport der Produkte über Bereiche des Transportwegs mit Neigungsänderungen. Die horizontalen und vertikalen Gelenkachsen der Kettenglieder stehen jeweils senkrecht zur Kettenlängsachse, bzw. der Laufrichtung der Multiflexkette und sind jeweils um 90° zueinander versetzt, um so ein sicheres, den Vertikalgelenken und Horizontalgelenken eindeutig zuordenbares, Verschwenken und Neigen der Multiflexkette zu ermöglichen.

Die Ausgestaltung des Vorderteils und Hinterteils jedes Kettenglieds einer erfindungsgemäßen Multiflexkette als Gabelkopfelement ermöglicht im Zusammenspielen mit der Ausbildung der getrennt voneinander angeordneten Vertikalgelenke und Horizontalgelenke der Kettenglieder als Bolzengelenke ein nahezu geschlossenes Plattenband ohne vorspringende Abschnitte der Plattenbandoberseite und/oder zusätzliche Spalte beim Neigen um das Horizontalgelenk, so dass die Multiflexkette unabhängig von deren Seitenbewegung sicher ein Verklemmen oder Verlieren der geförderten Produkte verhindert und sich die Verletzungsgefahr der an einer Förderrichtung mit einer solchen Multiflexkette arbeitenden Person deutlich reduziert. Neben der getrennten Ausbildung und versetzten Anordnung der Vertikalgelenke und Horizontalgelenke der Kettenglieder, wodurch sich insbesondere gegenüber Kardangelenke oder Kulissengelenke die Herstellungstoleranzen deutlich reduzieren lassen, ermöglicht die Ausbildung des Vorderteils und Hinterteils der Kettenglieder als Gabelkopfelemente eine kostengünstige Herstellung sowie eine einfache Montage der Multiflexkette und gleichzeitig ein spaltreduziertes durchgängige Oberfläche des Plattenbandes zur Förderung von Produkten, unabhängig von seitlicher Bewegung oder einer Neigung der Multiflexkette. Der Horizontalbolzen und der Vertikalbolzen werden aufgrund der Gabelkopfkonstruktion jeweils an ihren beiden Endbereichen an dem zugehörigen vorderen bzw. hinteren Element sicher geführt, was zu einer stabilen Konstruktion und einem ruhigen Lauf führt.

Eine bevorzugte Ausgestaltung sieht vor, dass das Vorderteil jedes Kettenglieds eine Zunge aufweist, die eine Plattenbandoberseite des Vorderteils ausbildet und das Vertikalgelenk sowie einen großen Teil des Hinterteils des Kettenglieds überdeckt. Eine solche Zunge oder Vorsprung des Vorderteils ermöglicht die vollständige Abdeckung des Vertikalgelenks sowie des sich durch das Vertikalgelenk erstreckenden Gelenkbolzens und verbessert damit die gleichmäßige ebene Ausgestaltung der Plattenbandoberseite. Dabei kann die Zunge mindestens 50 %, bevorzugt mindestens 65 % des Hinterteils des Kettenglieds überdecken. Das Vorsehen einer Zunge am Vorderteil der Kettenglieder ermöglicht mit dem Überdecken des Vertikalgelenks und eines großen Teils des Hinterteils des Kettenglieds eine spaltarme Ausführung des Plattenbands, bei der mindestens 95 %, bevorzugt mindestens 98 %, der Tragfläche spaltfrei ist.

Für eine gute Abdeckung des Hinterteils sowie des Kettengelenks mit dem angrenzenden Kettenglied, insbesondere beim starken Schwenken der Kettenglieder um die vertikale Gelenkachse, kann die Spitze der Zunge kreisabschnittsförmig ausgebildet sein. Zweckmäßigerweise kann dabei der Radius der kreisabschnittsförmigen Spitze der Zunge dem Abstand zwischen der Stirnseite der kreisabschnittsförmigen Spitze und der vertikalen Gelenkachse des Vertikalgelenks entsprechen. Ein solcher Radius der kreisabschnittsförmigen Spitze bzw. Stirnseite der Zunge ermöglicht beim Schwenken der Multiflexkette um die vertikale Gelenkachse eine unveränderte Abdeckung des Vertikalgelenks und eines Teils des Hinterteils des Kettenglieds und damit eine nahezu unveränderte Plattenbandoberseite.

Eine vorteilhafte Ausgestaltung sieht vor, dass der Abstand zwischen der vertikalen Gelenkachse des Vertikalgelenks und der horizontalen Gelenkachse des Horizontalgelenks mindestens 20 %, bevorzugt mindestens 30 % des Teilungsabstands der Kettenglieder in Laufrichtung der Multiflexkette liegt. Maximal kann der Abstand 40 % des Teilungsabstands betragen. Ein solcher Abstand zwischen der vertikalen und der horizontalen Gelenkachse ermöglicht mit der Teilung der Kettenglieder in Vorderteil und Hinterteil eine gute Versteifung der Multiflexkette durch die Trennung der Bewegungsachsen und des wechselseitigen Vorsehens von Horizontalgelenken und Vertikalgelenken.

Eine weitere Ausbildung sieht vor, dass auf einer Unterseite der Kettenglieder zwischen Seitenschenkeln des Hinterteils eine Aufnahme für die Zähne eines Antriebs-Kettenrads ausgebildet ist. Das Vorsehen entsprechender Aufnahmen, auf der der Plattenbandoberfläche abgewandten Unterseite der Kettenglieder ermöglicht einen sicheren Antrieb der Multiflexkette bei der Umlenkung um ein einfaches Antriebs-Kettenrad. Neben der sicheren Umlenkung kann der Eingriff der Zähne eines Antriebs-Kettenrads in die Aufnahme einen gleichmäßigen Antrieb der Multiflexkette ermöglichen und dadurch die Standsicherheit des Fördergutes auf der Multiflexkette verbessern. Im Gegensatz zu Multiflexketten mit kardanischem Gelenkaufbau, bei dem durch den geringeren Abstand zwischen den beiden Seitenschenkeln nur relativ schmale Kettenräder verwendet werden können, kann die Breite der Aufnahme auf der Unterseite der Kettenglieder zwischen den Seitenschenkeln des Hinterteils der erfindungsgemäßen Multiflexkette größer als 40 %, bevorzugt größer als 65 % der Gesamtbreite der Multiflexkette sein. Dadurch lassen sich zum Antrieb der Multiflexkette relativ breite Kettenräder verwenden, die trotz hoher Kettenzugkräfte eine relativ geringe Flächenpressung zwischen der Multiflexkette und dem Kettenrad ermöglichen, was zu einer Reduzierung der Belastung in den Bauteilen der Multiflexkette und damit zu einem geringeren Verschleiß führt.

Des Weiteren kann die Gesamtbreite der Multiflexkette zwischen dem 0,7-fachen und dem 1,5-fachen des Teilungsabstands der Kettenglieder betragen, bevorzugt zwischen dem 0,9-fachen und dem 1,3-fachen Teilungsabstand. Eine derartige Gesamtbreite der Multiflexkette, insbesondere bei einem durch den geteilten Aufbau der Kettenglieder und die Verwendung von Gabelkopfelementen möglichen großen Teilungsabstand, ermöglicht relativ große Transportflächen, auf denen das Fördergut sicher transportiert wird.

Eine günstige Ausgestaltung der Multiflexkette sieht vor, dass der Horizontalbolzen des Horizontalgelenks sich entlang der horizontalen Gelenkachse durch die an den Seitenschenkeln des Hinterteils eines Kettenglieds sowie an dem Kopfteil des Vorderteils eines angrenzenden Kettenglieds ausgebildeten Gelenköffnungen erstreckt, um benachbarte Kettenglieder miteinander zu verbinden, und der Vertikalbolzen des Vertikalgelenks eines Kettenglieds sich entlang der vertikalen Gelenkachse durch die an Seitenschenkeln des Vorderteils sowie an dem Kopfteil des Hinterteils ausgebildete Gelenköffnungen erstreckt, um das Vorderteil und das Hinterteil eines Kettenglieds miteinander zu verbinden. Solche Bolzengelenke sind konstruktiv einfache Lösungen zur Ausbildung der Vertikal- und Horizontalgelenke der Multiflexkette und darüber hinaus kostengünstig herstellbar. Die Bolzengelenke können auf einfache Weise schnell und sicher montiert werden, wenn die Gelenkbolzen des Horizontalgelenks und des Vertikalgelenks in mindestens einer Gelenköffnung des Horizontalgelenks oder des Vertikalgelenks befestigt sind, beispielsweise in einem Presssitz sitzen. Dabei können die Gelenkbolzen des Horizontalgelenks und/oder des Vertikalgelenks in einer sicheren Ausführung aus Stahl hergestellt sein, alternativ können jedoch auch Kunststoffbolzen eingesetzt werden. Zur besseren Fixierung, insbesondere in Kunststoffbauteilen der Multiflexkette, können die Gelenkbolzen zumindest bereichsweise gerändelt ausgebildet sein.

Eine Modifikation der Multiflexkette sieht vor, dass der Kettenradius um das Horizontalgelenk kleiner ist als der 1,65-fache Teilungsabstand der Kettenglieder, bevorzugt kleiner ist als der 1,5-fache Teilungsabstand der Kettenglieder. Ein solcher relativ enger Kettenradradius um das Horizontalgelenk der Kettenglieder der Multiflexkette ermöglicht einen platzsparenden Einbau der Multiflexkette in ein Transportsystem und eine scharfe Umlenkung der Multiflexkette, ohne eine Kollision der Kettenglieder oder der Vorder- und Hinterteile der Kettenglieder, insbesondere auch bei einem gleichzeitigen seitlichen Verschwenken der Multiflexkette um das Vertikalgelenk.

Für eine gute Beweglichkeit der Multiflexkette entlang des Transportweges des Förderguts kann der Kettenradius um das Vertikalgelenk kleiner als der 2,5-fache Teilungsabstand der Kettenglieder, bevorzugt kleiner als der 2,0-fache Teilungsabstand der Kettenglieder sein. Die hohe Bewegbarkeit der Multiflexkette ermöglicht einen angepassten Verlauf der Multiflexkette bei einer vorgegebenen Transportaufgabe.

Eine besondere Ausgestaltung sieht vor, dass das Vorderteil und/oder das Hinterteil jedes Kettenglieds aus Kunststoff hergestellt sein können. Die Verwendung von Kunststoff für die Herstellung der Vorderteile und Hinterteile jedes Kettengliedes einer erfindungsgemäßen Multiflexkette ermöglicht eine kostengünstige Produktion, insbesondere mittels einer einfachen Spritzgießherstellung. Alternativ kann jedoch auch ein metallischer Werkstoff (z. B. Sintermaterial oder Stahlguss) eingesetzt werden.

Im Folgenden wird eine Ausführungsform der erfindungsgemäßen Multiflexkette anhand von Zeichnungen näher erläutert. Es zeigen:
- Fig. 1: eine perspektivische Ansicht auf eine erfindungsgemäße Multiflexkette,
- Fig. 2a: eine Seitenansicht auf die Multiflexkette aus Fig. 1,
- Fig. 2b: eine Draufsicht auf die Multiflexkette aus Fig. 1,
- Fig. 2c: eine Unteransicht auf die Multiflexkette aus Fig. 1,
- Fig. 3: eine Draufsicht auf die Multiflexkette aus Fig. 1 in einer Umlenkung um die vertikale Achse,
- Fig. 4: eine Seitenansicht der Multiflexkette aus Fig. 1 in einer Umlenkung um die horizontale Achse und
- Fig. 5: eine Seitenansicht der Multiflexkette aus Fig. 1 in der Umlenkung um ein horizontal gelagertes Antriebskettenrad.

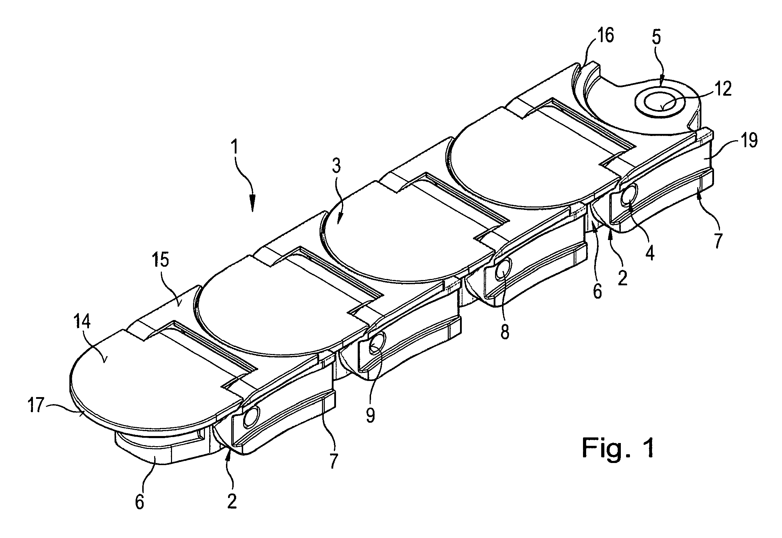

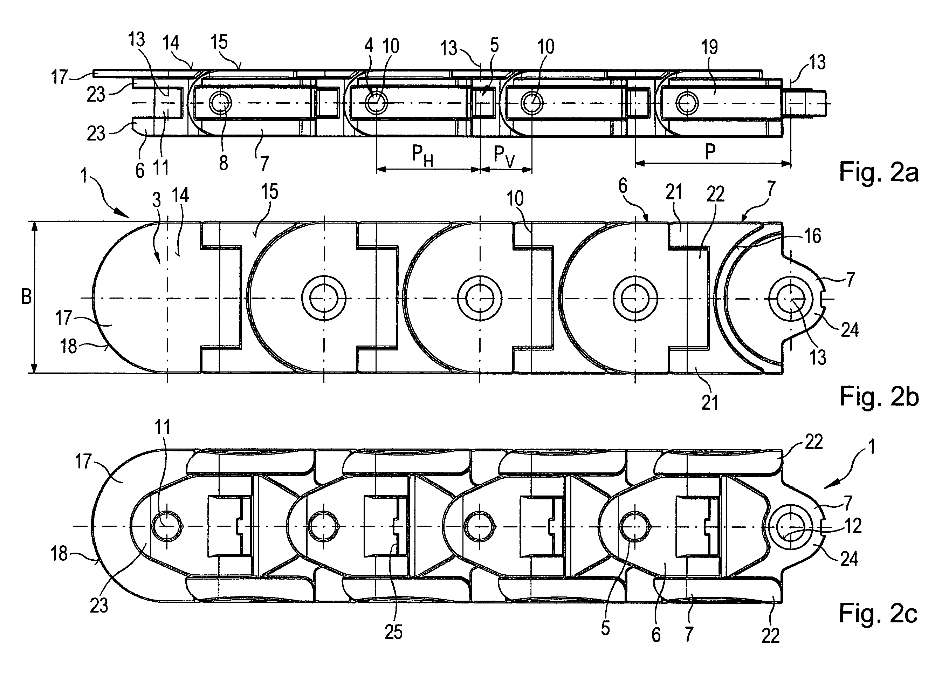

In der perspektivischen Ansicht einer erfindungsgemäßen Multiflexkette 1 in Fig. 1 ist neben dem mehrteiligen Aufbau der einzelnen Kettenglieder 2 der Multiflexkette 1 das mehrteilige Plattenband 3 sowie die im Abstand zueinander angeordneten Horizontalgelenke 4 und Vertikalgelenke 5 der Kettenglieder 2 zu erkennen. Die zweiteiligen Kettenglieder 2 weisen jeweils ein Vorderteil 6, auch Antriebsteil genannt, und ein Hinterteil 7, auch Führungsteil genannt, auf, die mittels des Vertikalgelenks 5 miteinander verbunden sind. Das Vertikalgelenk 5 umfasst einen Vertikalbolzen 11, der sich durch die zugehörigen Gelenköffnungen 12 des Vertikalgelenks 5 in Richtung der vertikalen Gelenkachse 13 erstreckt. Mittels des Vertikalgelenks 5 sind die Vorderteile und Hinterteile 7 der einzelnen Kettenglieder 2 der Multiflexkette 1 um die vertikale Gelenkachse 13 schwenkbar (s. Figur 2). Die Vorderteile 6 und Hinterteile 7 der einzelnen Kettenglieder 2 der Multiflexkette 1 sind über das Horizontalgelenk 4 miteinander verbunden. Dazu erstreckt sich ein Horizontalbolzen 8 durch die zugehörigen Gelenköffnungen 9 des Horizontalgelenks 4. Die Mittelachse des Horizontalbolzens 8 bildet dabei die horizontale Gelenkachse 10 aus, um die das Horizontalgelenk 4 neigbar ist.

Das Platten band 3 auf der Oberseite der Multiflexkette 1 wird direkt von dem Vorderteil 6 und Hinterteil 7 der Kettenglieder 2 ausgebildet, wobei die Vorderplatte 14 des Vorderteils 6 sich jeweils über einen Teil des Hinterteils 7 des jeweiligen Kettenglieds 2 erstreckt und dabei das Horizontalgelenk 4 von oben abdeckt. Entsprechend ist die Oberfläche der Hinterplatte 15 des Plattenbands 3 kleiner als die Vorderplatte 14, wobei auf der Oberseite des Hinterteils 7 eine Stufe 16 ausgebildet ist um die vorstehende Zunge 17 der Vorderplatte 14 aufzunehmen. Da sich das Vorderteil 6 eines Kettenglieds 2 mit der Zunge 17 der Vorderplatte 14 bei einem Verschwenken der Kettenglieder 2 um die vertikale Gelenkachse 13 des Vertikalgelenks 5 relativ zu dem Hinterteil 7 des angrenzenden Kettenglieds 2 verschwenkt, ist sowohl die Stirnseite 18 der Zunge 17 als auch die Stufe 16 im Hinterteil 7 kreisförmig ausgebildet, wobei der Radius der kreisförmigen Stirnseite 18 bzw. der kreisförmigen Stufe 16 dem Abstand zur vertikalen Gelenkachse 13 entspricht, um bei einem Verschwenken der Multiflexkette 1 um die vertikale Gelenkachse 13 ein im wesentlichen spaltfreies Gleiten der Vorderplatte 14 zu der Hinterplatte 15 des Plattenbands 3 zu ermöglichen.

An der Seite der Hinterteile 7 sind jeweils Führungsnuten 19 zu erkennen, die bei einer Umlenkung der Multiflexkette 1 um ein vertikal gelagertes Führungsrad 20 ein Abrutschen der Multiflexkette 1 vom Führungsrad 20 sicher zu verhindern. Die Führungsnuten 19 der Führungsteile bzw. Hinterteile 7 der Kettenglieder 2 ist nochmals deutlich in der Seitenansicht der Multiflexkette 1 in Fig. 2a zu erkennen.

Des Weiteren zeigt Fig. 2a das zwischen dem Vorderteil 6 und Hinterteil 7 angrenzender Kettenglieder 2 befindliche Horizontalgelenk 4 mit dem Horizontalbolzen 8 und der sich mittig durch den Horizontalbolzen 8 erstreckenden horizontalen Gelenkachse 10 sowie das Vertikalgelenk 5 zwischen den einzelnen Kettengliedern 2 der Multiflexkette 1 mit dem Vertikalbolzen 11 des Vertikalgelenks 5 und der sich mittig durch den Vertikalbolzen 11 erstreckenden vertikalen Gelenkachse 13. Der Teilungsabstand P der Multiflexkette 1 bzw. der Kettenglieder 2 ergibt sich aus dem Abstand der horizontalen Gelenkachse 10 eines Kettenglieds 2 bis zur horizontalen Gelenkachse 10 eines angrenzenden Kettenglieds 2 oder auch aus dem Abstand der vertikalen Gelenkachse 13 eines Kettenglieds 2 bis zur vertikalen Gelenkachse 13 eines angrenzenden Kettenglieds 2. Dieser Teilungsabstand P der Kettenglieder 2 der Multiflexkette 1 teilt sich innerhalb der Kettenglieder 2 in einen vorderen Teilungsabstand P_{V} für das Vorderteil und einen hinteren Teilungsabstand P_{H} für das Hinterteil 7 auf. Dabei bemisst sich der Teilungsabstand P_{V} des Vorderteils 6 aus dem Abstand der vertikalen Gelenkachse 13 zur horizontalen Gelenkachse 10 und der hintere Teilungsabstand P_{H} aus dem Abstand der horizontalen Gelenkachse 10 bis zur vertikalen Gelenkachse 13. Der Teilungsabstand P_{H} des Hinterteils 7 ist in dieser Ausführungsform genau doppelt so groß wie der vordere Teilungsabstand P_{V} des Vorderteils 6.

Fig. 2b zeigt eine Draufsicht auf die Multiflexkette 1. In dieser Draufsicht der Multiflexkette 1 ist deutlich die Segmentierung des Plattenbands 3 in eine Vorderplatte 14 des Vorderteils 6 und in eine Hinterplatte 15 des Hinterteils 7 zu erkennen. Neben der halbkreisförmigen Ausgestaltung der Stirnseite 18 der Zunge 17 sowie der komplementären Stufe 16 ist in Fig. 2b auch deutlich die Überlappung des Vorderteils 6 über das Hinterteil 7 im Bereich des Vertikalgelenks 5 zu erkennen. Die Seitenschenkel 21 des als Gabelkopfelements ausgeführten Hinterteils 7 überschneiden sich im Bereich der horizontalen Gelenkachse 10 mit dem Kopfteil 22 des Vorderteils 6, das ebenfalls als Gabelkopfelement ausgebildet ist. So kann sich der Horizontalbolzen 8 durch die entsprechenden Gelenköffnungen 9 in den Seitenschenkeln 21 des Hinterteils 7 und des Kopfteils 22 des Vorderteils 6 erstrecken um das Horizontalgelenk 4 auszubilden. Dabei sind die Seitenschenkel 21 und das Kopfteil 22 an den jeweiligen Stirnseiten abgerundet, um eine Neigung der Multiflexkette 1 um die horizontale Gelenkachse 10 mit einem nur geringen Spalt und ohne hervortretende Kanten zu ermöglichen.

Auch das Vertikalgelenk 5 zwischen den jeweiligen Kettengliedern 2 ist als Bolzengelenk ausgebildet, wobei der Aufbau am besten in der Untersicht der Multiflexkette 1 in Fig. 2c zu erkennen ist. Das Kopfteil 24 des als Gabelkopfelements ausgebildete Hinterteil 7 weist eine Gelenköffnung 12 des Vertikalgelenks 5 auf. Das Kopfteil 24 des Hinterteils 7 eines Kettenglieds 2 wird zur Verbindung der Kettenglieder 2 untereinander zwischen die Seitenschenkel 23 des ebenfalls als Gabelkopfelements ausgebildeten Vorderteils 6 angeordnet, so dass sich ein Vertikalbolzen 11 durch die zugehörigen Gelenköffnungen 12 in den Seitenschenkel 23 und dem Kopfteil 24 erstrecken kann, um die Kettenglieder 2 miteinander zu verbinden.

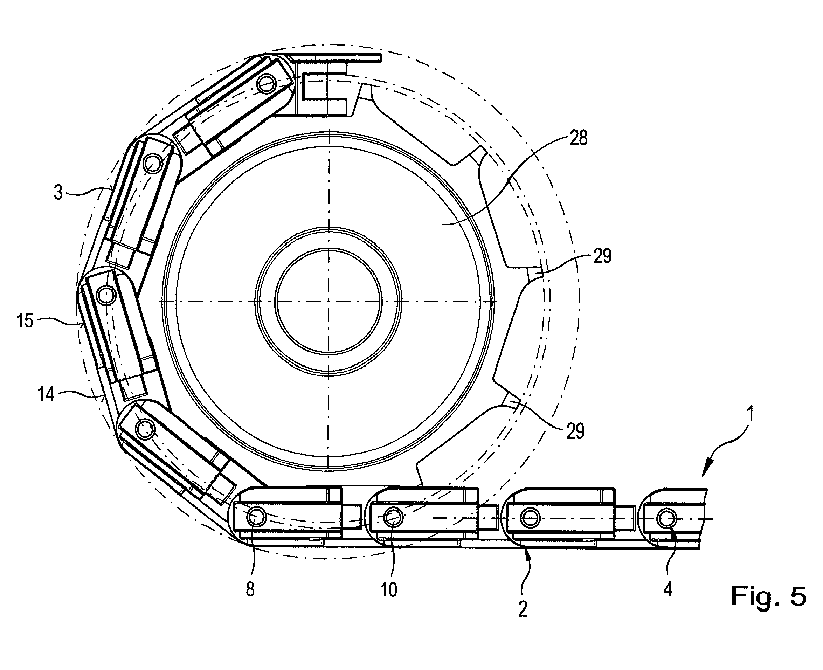

In der Unteransicht der Multiflexkette 1 in Fig. 2c ist darüber hinaus eine Vertiefung zwischen dem Vorderteil 6 und dem Hinterteil 7 zu erkennen, die bei einer Umlenkung der Multiflexkette 1 um ein Antriebs-Kettenrad 28 als Aufnahme 25 für die Zähne 29 des Antriebskettenrads 28 dient. Dabei drücken die Zähne 29 des Antriebskettenrads 28 in der Aufnahme 25 gegen das Kopfteil 22 des Vorderteils 6, bzw. des Antriebsteils des Kettenglieds 2, um die Multiflexkette 1 sicher und gleichmäßig anzutreiben. Dies ist noch einmal deutlich in Fig. 5 gezeigt. Da die Aufnahme 25 zwischen dem Vorderteil 6 und dem Hinterteil 7 der Kettenglieder 2 im Wesentlichen durch die Seitenschenkel 23 des Hinterteils 7 begrenzt ist, kann die Breite der Aufnahme relativ breit ausgeführt werden und bis zu 2/3 der Breite B der Multiflexkette 1 bzw. des Plattenbands 3 betragen.

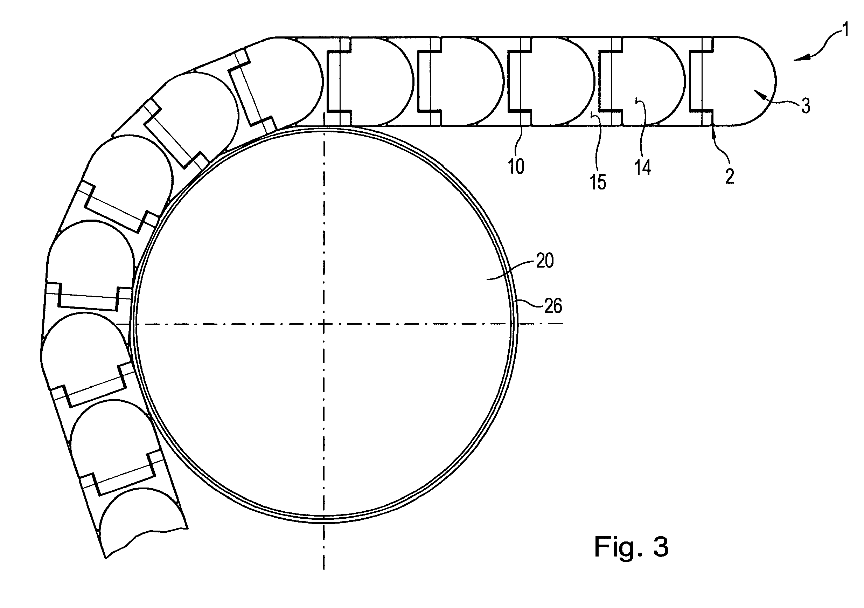

Die Draufsicht in Fig. 3 zeigt die Umlenkung einer erfindungsgemäßen Multiflexkette 1 um ein vertikal gelagertes Führungsrad 20 bei der die Kettenglieder 2 der Multiflexkette um das Vertikalgelenk 5 umgelenkt werden, so dass sie die Multiflexkette 1 in der Ebene des Führungsrads 20 verschwenkt ist. Zur Führung der Multiflexkette 1 beim Umlenken um das Führungsrad 20 sind an den Seitenschenkeln 21 der Hinterteile 7 der Kettenglieder 2 Führungsnuten 19 vorgesehen, die mit einem Führungsvorsprung 26 am Führungsrad 20 zusammenwirken um ein Verrutschen der Multiflexkette 1 auf dem Führungsrad 20 zu verhindern. Wie in dieser Darstellung gut zu erkennen ist, verdreht sich bei einer Umlenkung der Multiflexkette 1 um das Führungsrad 20 die Zunge 17 der Vorderplatte 14 des Plattenbands 3 zur Stufe 16 in der Hinterplatte 15 um die vertikale Gelenkachse 13, ohne dass sich der Spalt entlang der Zunge 17 und Stufe 16 zwischen Vorderplatte 14 und Hinterplatte 15 des Plattenbands 3 vergrößert.

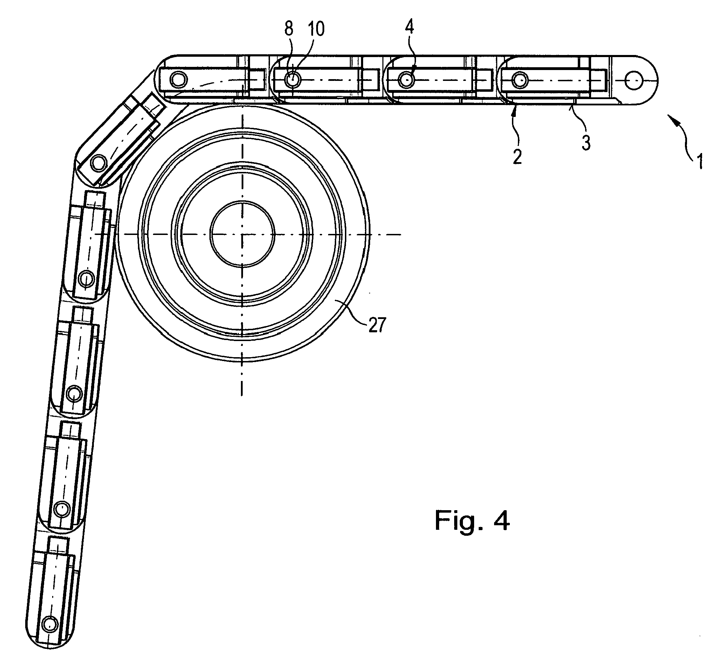

Bei der in Fig. 4 dargestellten Umlenkung der Multiflexkette 1 um die horizontalen Gelenkachsen 10 der Kettenglieder 2 bei der Führung der Multiflexkette 1 um ein Umlenkrad 27, erfolgt eine Neigungsänderung in der Multiflexkette 1 lediglich in den Horizontalgelenken 4 der Kettenglieder 2. Solche auf das Plattenband 3 aufdrückende Umlenkrollen 27 werden im Untertrum des Förderers eingesetzt. Der Aufbau des Multiflexkette 1 ermöglicht eine enge Umlenkung um die Plattenbandseite.

Beim Antrieb der Multiflexkette 1 mittels eines Antriebskettenrads 28, um das die Multiflexkette 1, wie in Fig. 5 dargestellt, über die Umlenkung um die Horizontalgelenke 4 der Kettenglieder 2 geführt wird, greifen die Zähne 29 des Antriebskettenrads 28 in die an der Unterseite der Multiflexkette 1 vorgesehenen Aufnahmen 25 zwischen Vorderteil 6 und Hinterteil 7 der Kettenglieder 2 ein. Der Antrieb einer Multiflexkette 1 mittels eines Antriebskettenrads 28 bei dem dessen Zähne 29 in entsprechende Aufnahmen 25 eingreifen, ermöglicht einen gleichmäßigen und ruckfreien Antrieb der Multiflexkette 1. Möglichst breite Zähne 29 und Aufnahmen 25 erleichtern eine gute Kraftübertragung und reduzieren den Verschleiß des Antriebskettenrads 28. Wie bei der in Fig. 5 dargestellten Umlenkung der Multiflexkette 1 mit einem außen liegenden Plattenband 3 gut zu erkennen ist, entsteht auch hier nur eine Dehnung des Horizontalgelenks 4 ohne den Spalt zwischen Vorderplatte 14 und Hinterplatte 15 des Plattenbands 3 zu vergrößern. Entsprechend bleibt der Spalt zwischen der Zunge 17 der Vorderplatte 14 und der Stufe 16 zur Hinterplatte 15 des Plattenbands 3 unverändert. Unabhängig von der Lage des Plattenbands 3 zum Antriebskettenrad 28 entsteht bei der Neigung der Multiflexkette 1 um das Antriebskettenrad 28 im Horizontalgelenk 4 kein Spalt und auch kein Vorsprung. Durch die Abrundung der Seitenschenkel 21 des Hinterteils 7 und des Kopfteils 22 des Vorderteils 6 im Bereich des Horizontalgelenks 4, die im gleichen Abstand zur horizontalen Gelenkachse 10 abgerundet sind, entsteht bei einer Neigung der Multiflexkette 1 um die horizontale Gelenkachse 10 lediglich eine Aufweitung oder Stauchung des Bereichs des Horizontalgelenks 4, aber keine Vergrößerung des Spalts im Horizontalgelenks 4 zwischen zwei Kettengliedern 2 und auch kein Vorspringen von Teilen des Horizontalgelenks 4 gegenüber der Ebene des Plattenbands 3.

Im Betrieb wird durch die erfindungsgemäße Multiflexkette 1 ein nahezu spaltfreies und vorsprungsfreies Plattenband 3 ermöglicht, sowohl beim seitlichen Verschwenken der Multiflexkette 1 um das Vertikalgelenk 5 als auch bei einer Neigung um das Horizontalgelenk 4. Bei der Neigung um das Horizontalgelenk 4 entsteht lediglich eine geringe Stauchung oder Streckung des Horizontalgelenks 4 ohne den Spalt zwischen den Teilen des Horizontalgelenks 4 zu verändern und ohne Stufen oder Vorsprünge gegenüber dem Plattenband 3 zuzulassen. Im Bereich der in Plattenbandförderer für den Transport von Produkten üblichen Neigung des Plattenbands 3 ist die Dehnung oder Stauchung des Horizontalgelenks 4 nahezu vernachlässigbar, so dass mit der erfindungsgemäßen Multiflexkette 1 ein nahezu störungsfreies Plattenband 3 realisierbar ist, um Produkte unabhängig von einer seitlichen und horizontalen Bewegung der Multiflexkette 1 sicher zu transportieren.

### Bezugszeichenliste:

- 1:: Multiflexkette
- 2:: Kettenglieder
- 3:: Plattenband
- 4:: Horizontalgelenk
- 5:: Vertikalgelenk
- 6:: Vorderteil/Antriebsteil
- 7:: Hinterteil/Führungsteil
- 8:: Horizontalbolzen
- 9:: Gelenköffnungen
- 10:: horizontale Gelenkachse
- 11:: Vertikalbolzen
- 12:: Gelenköffnungen
- 13:: vertikale Gelenkachse
- 14:: Vorderplatte
- 15:: Hinterplatte
- 16:: Stufe
- 17:: Zunge
- 18:: Stirnseite
- 19:: Führungsnuten
- 20:: Führungsrad
- 21:: Seitenschenkel
- 22:: Kopfteil
- 23:: Seitenschenkel
- 24:: Kopfteil
- 25:: Aufnahme
- 26:: Führungsvorsprung
- 27:: Umlenkrad
- 28:: Antriebskettenrad
- 29:: Zähne
- P:: Teilungsabstand (Pitch)
- P_{V}:: Teilungsabstand Vorderteil
- P_{H}:: Teilungsabstand Hinterteil
- B:: Breite Plattenband

## Patentansprüche

1. Multiflexkette (1) mit einem im Wesentlichen durchgehenden Plattenband (3) zum Fördern von Produkten, mit einer Vielzahl von Kettengliedern (2), die jeweils einen Teil des Plattenbands (3) ausbilden, wobei die Kettenglieder (2) mittels eines Horizontalgelenks (4) mit Horizontalbolzen (8) und horizontaler Gelenkachse (10) neigbar miteinander verbunden sind, wobei die Kettenglieder (2) jeweils aus einem Vorderteil (6) und einem Hinterteil (7) bestehen, wobei das Vorderteil (6) und das Hinterteil (7) jedes Kettenglieds (2) mittels eines Vertikalgelenks (5) mit Vertikalbolzen (11) und vertikaler Gelenkachse (13) schwenkbar miteinander verbunden sind, und wobei das Vorderteil (6) jedes Kettenglieds (2) als Gabelkopfelement ausgebildet ist, **dadurch gekennzeichnet, dass** das Hinterteil (7) jedes Kettenglieds (2) ebenfalls als Gabelkopfelement ausgebildet ist, und dass die Vertikalbolzen (11) und Horizontalbolzen (8) in einem horizontalen Abstand zueinander angeordnet sind, wodurch das Vertikalgelenk (5) und das Horizontalgelenk (4) jedes Kettenglieds (2) als getrennt voneinander angeordnete Bolzengelenke ausgebildet sind,

2. Multiflexkette (1) nach Anspruch 1,
**dadurch gekennzeichnet, dass** das Vorderteil (6) jedes Kettenglieds (2) eine Zunge (17) aufweist die eine Plattenbandoberseite des Vorderteils (6) ausbildet und das Vertikalgelenk (5) sowie einen großen Teil des Hinterteils (7) des Kettenglieds (2) überdeckt.

3. Multiflexkette (1) nach Anspruch 2,
**dadurch gekennzeichnet, dass** eine Spitze der Zunge (17) kreisabschnittsförmig ausgebildet ist.

4. Multiflexkette (1) nach Anspruch 3,
**dadurch gekennzeichnet, dass** der Radius der kreisabschnittsförmigen Spitze der Zunge (17) dem Abstand zwischen einer Stirnseite (18) der kreisabschnittsförmigen Spitze und der vertikalen Gelenkachse (13) des Vertikalgelenks (5) entspricht.

5. Multiflexkette (1) nach einem der Ansprüche 1 bis 4,
**dadurch gekennzeichnet, dass** der Abstand zwischen der vertikalen Gelenkachse (13) des Vertikalgelenks (5) und der horizontalen Gelenkachse (10) des Horizontalgelenks (4) mindestens 20 %, bevorzugt mindestens 30 % des Teilungsabstands (P) der Kettenglieder (2) beträgt.

6. Multiflexkette (1) nach einem der Ansprüche 1 bis 5,
**dadurch gekennzeichnet, dass** auf einer Unterseite der Kettenglieder (2) zwischen Seitenschenkeln (21) des Hinterteils (7) eine Aufnahme (25) für die Zähne (29) eines Antriebs-Kettenrads (28) ausgebildet ist.

7. Multiflexkette (1) nach Anspruch 6,
**dadurch gekennzeichnet, dass** die Breite der Aufnahme (25) zwischen den Seitenschenkeln (21) des Hinterteils (7) größer als 40 %, bevorzugt größer als 65 %, der Gesamtbreite (B) der Multiflexkette (1) ist.

8. Multiflexkette (1) nach einem der Ansprüche 1 bis 7,
**dadurch gekennzeichnet, dass** die Gesamtbreite (B) der Multiflexkette (1) zwischen dem 0,7- und 1,5-fachen, bevorzugt zwischen dem 0,9- und 1,3-fachen, Teilungsabstand (P) der Kettenglieder (2) beträgt.

9. Multiflexkette (1) nach einem der Ansprüche 1 bis 8,
**dadurch gekennzeichnet, dass** der Horizontalbolzen (8) des Horizontalgelenks (4) sich entlang der horizontalen Gelenkachse (10) durch die an den Seitenschenkeln (21) des Hinterteils (7) eines Kettenglieds sowie an dem Kopfteil (22) des Vorderteils (6) eines angrenzenden Kettenglieds (2) ausgebildete Gelenköffnungen (9) erstreckt und der Vertikalbolzen (11) des Vertikalgelenks (5) eines Kettenglieds (2) sich entlang der vertikalen Gelenkachse (13) durch die an den Seitenschenkeln (23) des Vorderteils (6) sowie an dem Kopfteil (24) des Hinterteils (7) ausgebildeten Gelenköffnungen (12) erstreckt.

10. Multiflexkette (1) nach Anspruch 9,
**dadurch gekennzeichnet, dass** der Horizontalbolzen (8) des Horizontalgelenks (4) in mindestens einer Gelenköffnung (9) des Horizontalgelenks (4) und der Vertikalbolzen des Vertikalgelenks (5) des Horizontalgelenks (4) in mindestens einer Gelenköffnung (12) des Vertikalgelenks (5) in einem Presssitz sitzen.

11. Multiflexkette (1) nach Anspruch 9 oder 10 ,
**dadurch gekennzeichnet, dass** die Horizontalbolzen (8) des Horizontalgelenks (4) und/oder die Vertikalbolzen (11) des Vertikalgelenks (5) aus Stahl oder Kunststoff hergestellt sind.

12. Multiflexkette (1) nach einem der Ansprüche 1 bis 11,
**dadurch gekennzeichnet, dass** der Kettenradradius um das Horizontalgelenk (4) kleiner ist als der 1,65-fache Teilungsabstand (P) der Kettenglieder (2), bevorzugt kleiner ist als der 1,5-fache Teilungsabstand (P) der Kettenglieder (2).

13. Multiflexkette (1) nach einem der Ansprüche 1 bis 12,
**dadurch gekennzeichnet, dass** der Kettenradradius um das Vertikalgelenk (5) kleiner ist als der 2,5-fache Teilungsabstand (P) der Kettenglieder (2), bevorzugt kleiner ist als der 2,0-fache Teilungsabstand (P) der Kettenglieder (2).

14. Multiflexkette (1) nach einem der Ansprüche 1 bis 13,
**dadurch gekennzeichnet, dass** das Vorderteil (6) und/oder das Hinterteil (7) jedes Kettenglieds (2) aus Kunststoffsintermaterial oder Stahlguss hergestellt ist.
